(19)

**Europäisches Patentamt**
**European Patent Office**
**Office européen des brevets**

(11) **EP 3 594 923 A1**

(12) **EUROPEAN PATENT APPLICATION**

(43) Date of publication:
**15.01.2020 Bulletin 2020/03**

(51) Int Cl.:
**G08G 5/00** (2006.01)      **G08G 5/04** (2006.01)

(21) Application number: **19184283.0**

(22) Date of filing: **03.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2018 US 201816034849**

(71) Applicant: **Honeywell International Inc.**
**Morris Plains, NJ New Jersey 07950 (US)**

(72) Inventors:
• CHEN, Haiping
  **Morris Plains, NJ 07950 (US)**
• ZHENG, Jinghua
  **Morris Plains, NJ 07950 (US)**
• ZHANG, Yilong
  **Morris Plains, NJ 07950 (US)**

(74) Representative: **Houghton, Mark Phillip**
**Patent Outsourcing Limited**
**Corner House**
**1 King Street**
**Bakewell**
**Derbyshire DE45 1DZ (GB)**

(54) **CHARACTERISTICS OF GRAPHICAL ICONS FOR PRESENTATION OF TRAFFIC INFORMATION**

(57)      In some examples, a system includes a receiver configured to receive a signal and processing circuitry configured to determine a velocity vector of the ownship vehicle and determine a position of a target vehicle relative to the ownship vehicle based on the signal, determine a velocity vector of the target vehicle relative to the ownship vehicle based on the signal and the velocity vector of the ownship vehicle, and determine a characteristic of a graphical vector icon of the velocity vector of the target vehicle based on a display range of a graphical user interface. The processing circuitry is also configured to present, via a display, the graphical user interface including a first graphical icon corresponding to the ownship vehicle, a second graphical icon corresponding to the target vehicle based on the position of the target vehicle relative to the ownship vehicle, and the graphical vector icon with the characteristic.

FIG. 1

EP 3 594 923 A1

**Description**

**TECHNICAL FIELD**

This disclosure relates to the presentation of traffic information.

**BACKGROUND**

A collision avoidance system, such as a traffic collision avoidance system (TCAS) or a cockpit display of traffic information (CDTI), can present information about the location of a target vehicle. The collision avoidance system can determine the location of the target vehicle based on cooperative means (e.g., surveillance signals, audio transmissions) or non-cooperative means (e.g., radar, visual). The collision avoidance system may also receive information about the location of the target vehicle from a third party (e.g., a base station, a subscription service, another vehicle). By presenting the location of the target vehicle, the collision avoidance system may increase the awareness of a vehicle operator.

**SUMMARY**

In general, this disclosure relates to systems, devices, and techniques for presenting a graphical user interface including graphical icons representing the relative positions and relative velocities of two or more vehicles. The graphical user interface includes a first graphical icon corresponding to an ownship vehicle and a second graphical icon corresponding to a target vehicle. The graphical user interface also includes a graphical vector icon that indicates the velocity of the target vehicle relative to the ownship vehicle. A characteristic of the graphical vector icon, such as the length, thickness, dash type, arrow type, and/or color, is based on a display range of the graphical user interface.

In some examples, a system is configured to mount on an ownship vehicle, and the system includes a receiver configured to receive a signal and processing circuitry configured to determine a velocity vector of the ownship vehicle and determine a position of a target vehicle relative to the ownship vehicle based on the signal. The processing circuitry is also configured to determine a velocity vector of the target vehicle relative to the ownship vehicle based on the signal and the velocity vector of the ownship vehicle. The processing circuitry is further configured to determine a characteristic of a graphical vector icon of the velocity vector of the target vehicle based on a display range of a graphical user interface. The processing circuitry is configured to present, via a display, the graphical user interface including a first graphical icon corresponding to the ownship vehicle, a second graphical icon corresponding to the target vehicle based on the position of the target vehicle relative to the ownship vehicle, and the graphical vector icon with the characteristic.

In some examples, a method includes determining a velocity vector of the ownship vehicle, determining a position of a target vehicle relative to the ownship vehicle, and determining a velocity vector of the target vehicle relative to the ownship vehicle based on the velocity vector of the ownship vehicle. The method also includes determining a characteristic of a graphical vector icon of the velocity vector of the target vehicle based on a display range of a graphical user interface. The method further includes presenting, via a display, the graphical user interface including a first graphical icon corresponding to the ownship vehicle, a second graphical icon corresponding to the target vehicle based on the position of the target vehicle relative to the ownship vehicle, and the graphical vector icon with the characteristic.

In some examples, a device includes a computer-readable medium having executable instructions stored thereon, configured to be executable by processing circuitry for causing the processing circuitry to receive, from a receiver, a signal and determine a velocity vector of the ownship vehicle. The instructions, when executed, also cause the processing circuitry to determine a position of a target vehicle relative to the ownship vehicle based on a particular source of data based on the signal, determine a velocity vector of the target vehicle relative to the ownship vehicle based on the velocity vector of the ownship vehicle, and determine a characteristic of a graphical vector icon of the velocity vector of the target vehicle based on a display range of a graphical user interface. The instructions, when executed, further cause the processing circuitry to present, via a display, the graphical user interface including a first graphical icon of the ownship vehicle, a second graphical icon of the target vehicle based on the target vehicle relative to the position of the ownship vehicle, and the graphical vector icon with the characteristic.

The details of one or more examples of the disclosure are set forth in the accompanying drawings and the description below. Other features, objects, and advantages will be apparent from the description, drawings, and claims.

**BRIEF DESCRIPTION OF THE DRAWINGS**

FIG. 1 is a conceptual block diagram of an example system including processing circuitry, a display, and a receiver, in accordance with some examples of this disclosure.

FIG. 2 is a graphical user interface including two graphical icons corresponding to vehicles and a graphical vector icon, in accordance with some examples of this disclosure.

FIGS. 3A-3D are graphical user interfaces with differing closure rates (C), distances (D) between vehicles, and display ranges (DR), in accordance with some examples of this disclosure.

FIG. 4 is a conceptual block diagram of an example system including means for receiving data indicating the positions of vehicles, in accordance with some examples of this disclosure.

FIG. 5 shows graphical icons with differing characteristics.

FIGS. 6A-6C are conceptual diagrams showing the determination of a relative velocity vector based on two absolute velocity vectors, in accordance with some examples of this disclosure.

FIG. 7 is a graphical user interface including five graphical icons corresponding to vehicles and four graphical vector icons, in accordance with some examples of this disclosure.

FIG. 8 is a conceptual diagram showing the determination of a relative velocity vector and a closure vector based on two absolute velocity vectors, in accordance with some examples of this disclosure.

FIG. 9 is a flowchart illustrating example techniques for presenting a graphical user interface including graphical icons corresponding to vehicles and a graphical vector icon, in accordance with some examples of this disclosure.

FIG. 10 shows additional example graphical icons with differing characteristics, in accordance with some examples of this disclosure.

## DETAILED DESCRIPTION

A system may include processing circuitry configured to present a graphical user interface including indications of the position of nearby vehicle traffic relative to an ownship vehicle. The operator and/or crew of the ownship vehicle can view the graphical user interface to determine the possibility of a future collision between the ownship vehicle and a target vehicle. The processing circuitry can present a graphical icon (e.g., a symbol) corresponding to each target vehicle. The vehicle operator can view the graphical user interface to gain awareness of the nearby vehicle traffic and to assess any intruder vehicles that may threaten the ownship vehicle.

Processing circuitry of this disclosure may present a graphical user interface that includes a graphical vector icon indicating the velocity vector of a target vehicle relative to the ownship vehicle. The system may also determine a characteristic of the graphical vector icon based on a display range. By presenting a graphical vector icon and selecting the characteristic based on the display range, the system may give a vehicle operator more relevant information about the possibility of future collisions. The graphical vector icon and/or graphical icon for a vehicle can present the relevant information about the relative velocity and threat potential of a target vehicle in a simple manner that is easy for an operator to understand regardless of what language the operator speaks. As a result, while operating a vehicle and using the improved graphical user interface of this disclosure, the vehicle operator may save time and effort in having to interpret information or draw conclusions, which may improve safety and/or operational performance.

In contrast, another system may present a graphical user interface that includes information for the traffic situation at the current time only, without any information about relative velocity, closure trends, or future positions of target vehicles. A vehicle operator may have difficulty assessing the threat or likelihood of a future collision with a target vehicle without velocity vectors or closure trend information. A system that does not present graphical vector icons may not provide sufficient information about the future movements of target vehicles to enable a vehicle operator to evaluate threats and avoid intruder vehicles. The vehicle operator may have to view the graphical user interface for a longer period of time to determine the closure trend of a target vehicle based on the movement of a graphical icon for a vehicle over time.

Processing circuitry of this disclosure may be configured to present an indication of a rate of closure on the graphical user interface. The indication of the rate of closure may include an arrow and/or a number. In some examples, the indication includes an upward-pointing arrow when the system determines that the closure rate between the target vehicle and the ownship vehicle exceeds a threshold rate. The system may present the indication of closure in response to determining that the travel characteristics of the target vehicle satisfy certain criteria. The processing circuitry may be configured to present a graphical vector icon with a graphical icon for a vehicle in response to determining that the associated target vehicle satisfies certain criteria, such as speed exceeding a threshold, relative velocity exceeding a threshold, and/or rate of closure exceeding a threshold.

Presentation of a graphical icon for a vehicle and a graphical vector icon (e.g., a traffic closure trend indicator) may allow the vehicle operator and crew to determine the current status and potential future traffic conditions. Example systems that can present graphical vector icons and graphical icons for vehicles include a traffic collision avoidance system (TCAS) or a cockpit display of traffic information (CDTI) mounted on an aircraft or a similar system mounted on a land vehicle or a marine vehicle. Example systems also include systems in a base station, such as an air-traffic-control (ATC) station, in order to maintain separation between vehicles in the vicinity of the ATC station.

The determination of a target vehicle's position and velocity may be based on any of the following data sources:

surveillance signals received from the target vehicle (e.g., automatic dependent surveillance - broadcast (ADS-B)), radar signals reflected off the target vehicle, radio signals received from the target vehicle (e.g., recorded audio from a crewmember), visual means, user inputs, and so on. A system of this disclosure may be configured to determine the position and velocity of the target vehicle based on one or more of these data sources. In some examples, a target vehicle may cooperate by transmitting surveillance signals and/or radio signals to the ownship vehicle. However, some target vehicles may not transmit surveillance signals or radio signals. A system of this disclosure may be configured to determine the position and velocity of the target vehicle using non-cooperative means (e.g., radar). The system then presents a graphical user interface including icons that indicate the position and velocity of the target vehicle. A vehicle operator viewing the graphical user interface may quickly and easily ascertain the traffic situation, which improves vehicle safety and saves time and effort for the vehicle operator.

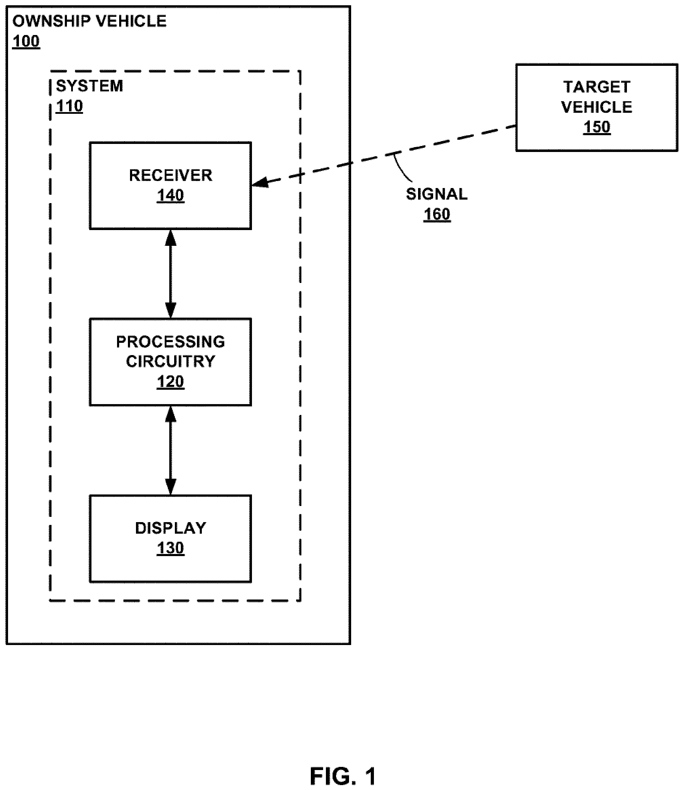

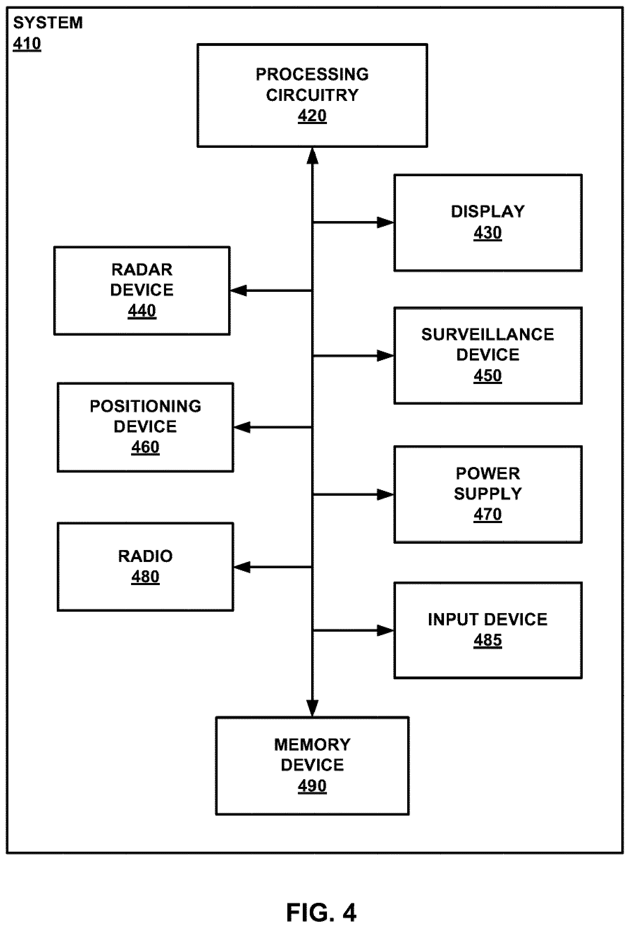

FIG. 1 is a conceptual block diagram of an example system 110 including processing circuitry 120, a display 130, and a receiver 140, in accordance with some examples of this disclosure. System 110 is mounted onboard ownship vehicle 100. System 410 shown in FIG. 4 is an example of system 110. In some examples, system 110 does not include display 130 but may be connected to an external display not shown in FIG. 1. Display 130 is not a necessary component of system 110 because processing circuitry 120 may be configured to present a graphical user interface via a display that is external to system 110.

Ownship vehicle 100 and/or target vehicle 150 may be any mobile object or remote object. In some examples, ownship vehicle 100 and/or vehicle 150 may be an aircraft such as a helicopter or a weather balloon, or ownship vehicle 100 and/or vehicle 150 may be a space vehicle such as a satellite or spaceship. In yet other examples, ownship vehicle 100 and/or vehicle 150 may include a land vehicle such as an automobile or a water vehicle such as a ship or a submarine. Ownship vehicle 100 and/or vehicle 150 may be a manned vehicle or an unmanned vehicle, such as a drone, a remote-control vehicle, or any suitable vehicle without any pilot or crew on board.

System 110 includes processing circuitry 120, display 130, and receiver 140. System 110 may include additional components such as a transceiver, a radar device (e.g., for obstacle detection), a surveillance device such as an ADS-B device, a positioning device such as a Global Navigation Satellite System (GNSS), a power supply such as a battery, a radio, and/or a memory device. System 110 may include equipment so that processing circuitry 120 can determine the positions and velocities of ownship vehicle 100 and target vehicle 150. For example, system 110 may include satellite navigation equipment such as GNSS or any other suitable means for determining the location of ownship vehicle 100.

Processing circuitry 120 is configured to determine a position and/or location of ownship vehicle 100. For example, system 110 may include satellite navigation equipment configured to receive a GNSS signal, and processing circuitry 120 can use the GNSS signal to determine the location of ownship vehicle 100. Processing circuitry 120 can determine the position of ownship vehicle 100 in terms of latitude, longitude, or altitude. Additionally or alternatively, processing circuitry 120 can determine the position of ownship vehicle 100 with respect to a landmark, object, or another vehicle.

Processing circuitry 120 is also configured to determine a velocity vector of ownship vehicle 100. To determine the velocity vector of ownship vehicle 100, processing circuitry 120 the speed, velocity, bearing, and course of ownship vehicle 100 using, for example, satellite navigation, gyroscopic instruments, a compass, flight plan data, and/or any other suitable equipment. Processing circuitry 120 may be configured to determine the course of ownship vehicle 100 using the current trajectory of ownship vehicle 100 along with the flight plan and destination of ownship vehicle 100. The velocity vector of ownship vehicle 100 includes an estimated speed and an estimated direction of travel of ownship vehicle 100.

Processing circuitry 120 is further configured to determine the position of target vehicle 150 relative to the position of ownship vehicle 100. Processing circuitry 120 can determine the location of target vehicle 150 based on ADS-B signals (e.g., signal 160) received from target vehicle 150, which may encode location data, velocity data, flight path data, and other data for target vehicle 150. Processing circuitry 120 can also use reflected radar signals (e.g., signal 160) to determine the location of target vehicle 150 based on the phase, angle of arrival, amplitude, and/or frequency of the reflected radar signals.

Processing circuitry 120 is also configured to determine the velocity vector of target vehicle 150 relative to ownship vehicle 100 based on the velocity vector of ownship vehicle 100. Processing circuitry 120 can determine the velocity vector of target vehicle 150 based on, for example, data encoded in signal 160 if signal 160 is a surveillance signal. Processing circuitry 120 can also determine the velocity vector of target vehicle 150 based on the frequency of signal 160 if signal 160 is a reflected radar signal (e.g., the Doppler effect). Processing circuitry 120 may then determine the velocity vector of target vehicle 150 relative to ownship vehicle 100 at least in part by subtracting the velocity vector of ownship vehicle 100 from the velocity vector of target vehicle 150. Processing circuitry 120 can determine the velocity vector of target vehicle 150 based on the position of target vehicle 150 at two different time, for example, by using the vector between the two positions (e.g., the direction) and the distance between the two positions divided by the time (e.g., the speed).

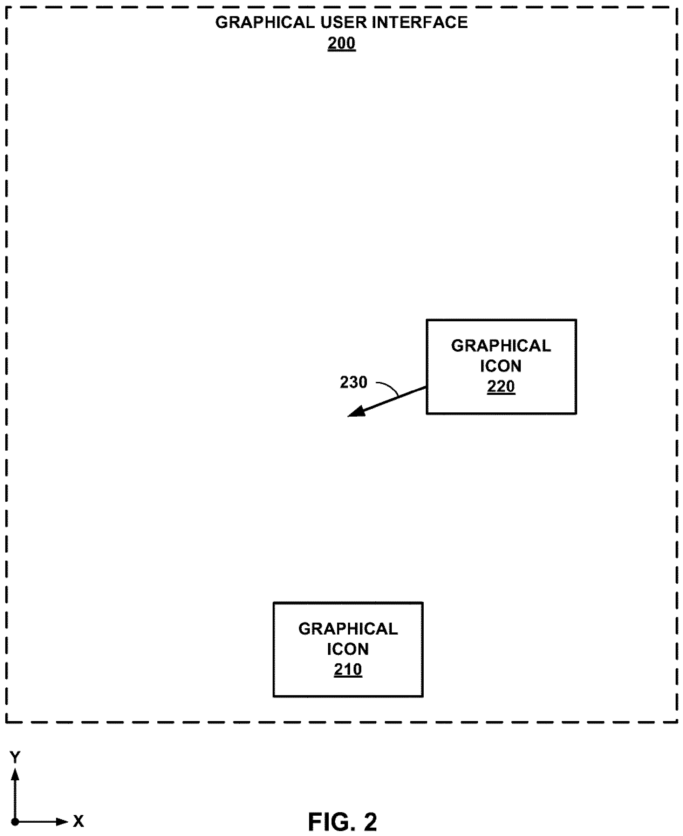

Processing circuitry 120 is configured to present, via display 130, a graphical user interface including graphical icons for vehicles 100 and 150. The graphical user interface can include a graphical icon of ownship vehicle 100, a graphical icon of target vehicle 150, and a graphical vector icon of the velocity vector of target vehicle 150 relative to ownship vehicle 100. In some examples, processing circuitry 120 presents the graphical icon of ownship vehicle 100 at a fixed location on the graphical user interface. Graphical user interfaces 200, 300, and 700 shown in FIGS. 2, 3, and 7 are examples of graphical user interfaces presented by processing circuitry 120.

Processing circuitry 120 may present the graphical icon of target vehicle 150 at a location on the graphical user interface that indicates the position of target vehicle 150 relative to the position of ownship vehicle 100. For example, if ownship vehicle 100 is traveling towards the current position of target vehicle 150, processing circuitry 120 may present the graphical icon of target vehicle 150 directly above the graphical icon of ownship vehicle 100. Processing circuitry 120 may determine the position of the graphical icon of target vehicle 150 based on the distance between vehicles 100 and 150 and the display range of the graphical user interface. For example, if the distance between vehicles 100 and 150 is ten miles, and the display range of the graphical user interface is one hundred miles, then processing circuitry 120 can determine a position of the graphical icon of target vehicle 150 one-tenth of the display range from the graphical icon of ownship vehicle 100.

Processing circuitry 120 is further configured to determine a characteristic of the graphical vector icon based on a display range of the graphical user interface. Characteristics of the graphical vector icon include the length of the graphical vector icon, the thickness of the graphical vector icon, whether the range of the graphical user interface includes a solid line or a dashed line, the arrow type of the graphical vector icon, the color of the graphical vector icon, whether the graphical vector icon is solid or blinking, and/or any other characteristic of the graphical vector icon. For example, if processing circuitry 120 determines that target vehicle 150 is travelling at a speed of one hundred miles per hour, and the display range of the graphical user interface is two hundred miles, processing circuitry 120 can determine that the graphical vector icon has a length of X (e.g., twenty pixels or one centimeter). If processing circuitry 120 determines that target vehicle 150 is travelling at a speed of one hundred miles per hour, and the display range of the graphical user interface is one hundred miles, processing circuitry 120 can determine that the graphical vector icon has a length of 2X. Thus, the length of the graphical vector icon may be inversely proportional to the display range of the graphical user interface.

Display 130 may be configured to present a graphical user interface to a user such as a vehicle operator and/or a vehicle crewmember, where the graphical user interface includes one or more graphical icons and one or more graphical vector icons. For example, processing circuitry 120 may be configured to present, via display 130, the relative positions of vehicles 100 and 150 as graphical icons on a graphical user interface. Processing circuitry 120 may be further configured to present information regarding the velocity vectors of vehicles, the closure rates of target vehicles, data sources for the positions and velocities of each target vehicle, the relative altitude of target vehicles, the vertical speed of target vehicles (climb or decline), the display range of the graphical user interface, the distance between vehicles, and/or any other characteristics. For example, processing circuitry 120 may be configured to present information about whether target vehicle 150 is airborne, on the ground, or on water.

Display 130 may include a monitor, cathode ray tube display, a flat panel display such as a liquid crystal (LCD) display, a plasma display, a light emitting diode (LED) display, and/or any other suitable display. Display 130 may be part of a personal digital assistant, mobile phone, tablet computer, laptop computer, any other suitable computing device, or any combination thereof, with a built-in display or a separate display. Display 130 may also include means for projecting audio to a user, such as speaker(s). Processing circuitry 120 may be configured to present, via display 130, a visual, audible, tactile, or somatosensory notification (e.g., an alarm signal) indicative of the likelihood of a collision between vehicles 100 and 150. In some examples where display 130 is not part of system 110, processing circuitry 120 may be configured to present a graphical user interface via a display outside of system 110.

Receiver 140 is configured to receive signal 160, which indicates the location and velocity of target vehicle 150. Receiver 140 may include a radar device for detecting weather conditions and/or for obstacle detection. The radar device may transmit radar signals, and processing circuitry 120 may be configured to determine the position and velocity of target vehicle 150 based on characteristics of the reflections of the radar signals that return to receiver 140 (e.g., phase, angle of arrival, amplitude, frequency). Receiver 140 may include a surveillance device such as an automatic dependent surveillance-broadcast (ADS-B) device. The surveillance device may receive surveillance signals from target vehicle 150 that encode location data, velocity data, and/or other travel data.

Receiver 140 may include a radio for receiving audio signals transmitted by target vehicle 150. The audio signals may indicate the position, velocity, and/or direction of travel of target vehicle 150. In some examples, receiver 140 may be configured to receive signal 160 from another vehicle or a base station, where signal 160 encodes data indicating the position and velocity of target vehicle 150. A data center may provide traffic information to subscribing vehicles so that ownship vehicle 100 can determine the positions and velocities of other vehicles even without surveillance, radar, radio, or visual.

Target vehicle 150 may be configured to transmit signal 160 to receiver 140 or to cause signal 160 to reflect back to receiver 140. In some examples, processing circuitry 120 will present a graphical icon for target vehicle 150 in response to determining that the distance between vehicles 100 and 150 is less than a threshold distance (e.g., a predefined range). Processing circuitry 120 may be configured to present a graphical vector icon for target vehicle 150 in response to determining that target vehicle 150 is approaching or closing in on ownship vehicle 100. Processing circuitry 120 may be configured to present a graphical vector icon for target vehicle 150 in response to determining the speed of target vehicle 150 exceeds a threshold speed or if the velocity of target vehicle 150 relative to ownship vehicle 100 exceeds a threshold velocity. System 110 may also include an input device (e.g., input device 485 shown in FIG. 4) that allows a user to select the criteria for presenting graphical vector icons.

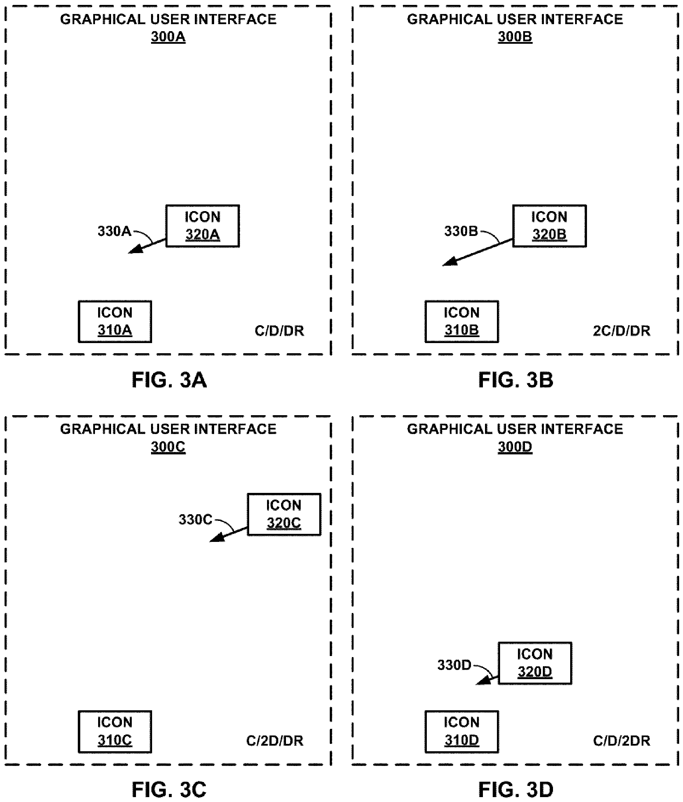

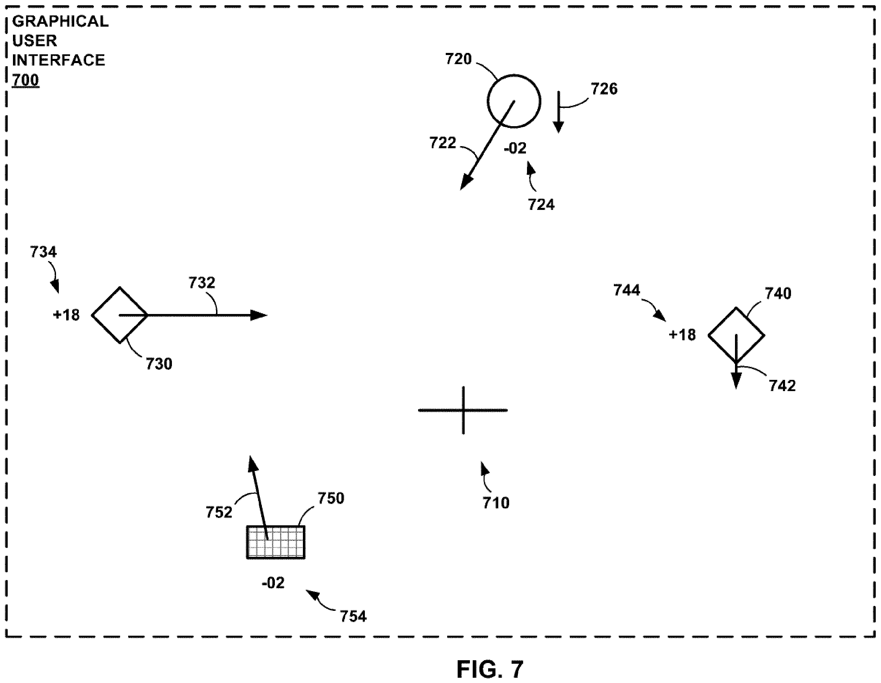

FIG. 2 is a graphical user interface 200 including two graphical icons 210 corresponding to vehicles and 220 and a graphical vector icon 230, in accordance with some examples of this disclosure. Graphical user interfaces 300A-300B and 700 shown in FIGS. 3A-3D and 7 are examples of Processing circuitry 120 may be configured to present graphical user interface 200 as a rectangular-shaped interface, a circular-shaped interface, an oval-shaped interface, and/or any other shape. Processing circuitry 120 can determine the display range of graphical user interface 200 as the x-axis distance across graphical user interface 200, the y-axis distance across graphical user interface 200, the radius or diameter of graphical user interface 200 (if graphical user interface 200 is generally circular-shaped), and/or any other measure of display range of graphical user interface 200.

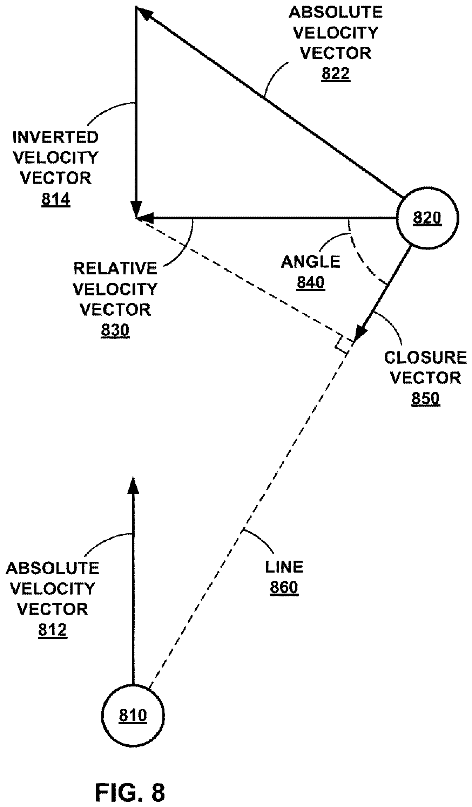

Graphical vector icon 230 is shown in FIG. 2 as a line with an arrow on one end, but graphical vector icon 230 may include a line, a shape, and/or any other icon. Processing circuitry 120 may be configured to present graphical vector icon 230 adjacent to and/or overlapping with graphical icon 220. Processing circuitry 120 may be configured to determine one or more characteristics (e.g., the length or thickness) of graphical vector icon 230 based on criteria such as the speed of the target vehicle, the rate of closure of the target vehicle, and/or the display range of graphical user interface 200. As discussed with respect to FIG. 8, the closure vector of a target vehicle is not necessarily the same as the relative velocity vector.

Processing circuitry 120 may be configured to present graphical icon 210 for an ownship vehicle at a static position on graphical user interface 200. The static position for graphical icon 210 may be at the bottom-center of graphical user interface 200, as shown in FIG. 2. Alternatively, processing circuitry 120 may determine a position for graphical vehicle icon 210 based on the speed of the ownship vehicle. If the ownship vehicle is travelling forward at a high speed, processing circuitry 120 may present graphical icon 210 at the bottom of graphical user interface 200 to make room for presenting objects in the travel path of the ownship vehicle.

Processing circuitry 120 may be configured to present graphical icon 220 at a position on graphical user interface 200 based on the distance between the ownship vehicle and the target vehicle associated with graphical icon 220. Processing circuitry 120 may also determine the position at which to present graphical icon 220 based on the display range of graphical user interface 200. For example, if the distance between the ownship vehicle and the target vehicle is one hundred miles and the display range is two hundred miles, processing circuitry 120 may determine a relative position for graphical icon 220 that is halfway across graphical user interface 200.

Processing circuitry 120 is configured to configured to determine a characteristic of graphical vector icon 230 based on a display range of graphical user interface 200. For example, processing circuitry 120 may be configured to determine the length of graphical vector icon 230 as inversely proportional to the display range of graphical user interface 200. Processing circuitry 120 may use Equation (1) to determine the length of graphical vector icon 230, where A is a constant value. For example, if the target vehicle is travelling at fifty miles per hour, the display range is one hundred miles, and A equals one half, processing circuitry 120 may determine that the length of graphical vector icon 230 is one quarter of the display range.

$$Length\ of\ vector\ icon = A \times \frac{Relative\ speed\ of\ target\ vehicle}{Display\ range\ of\ GUI} \qquad (1)$$

FIGS. 3A-3D are graphical user interfaces 300A-300D with differing closure rates (C), distances (D) between vehicles, and display ranges (DR), in accordance with some examples of this disclosure. In the examples of FIGS. 3A-3D, processing circuitry 120 is configured to determine the length (e.g., a characteristic) of graphical vector icons 330A-330D based on the closure rates, distances, and display range. The operator of the ownship vehicle can view one of graphical user interfaces 300A-300D for an indication of how quickly two vehicles will meet or to determine the likelihood of a collision.

As shown in FIGS. 3A-3D, graphical icons 310A-310D are presented in the same position on graphical user interfaces 300A-300D (near the bottom of graphical user interfaces 300A-300D). Processing circuitry 120 can determine the positions of graphical icons 320A-320D based on the distance between the ownship vehicle and the target vehicle (e.g., FIG. 3C) and the display range of the graphical user interface (e.g., FIG. 3D). Processing circuitry 120 may use Equation (2) to determine the position of graphical icons 320A-320D, where B is a constant value.

$$Distance\ between\ icons = B \times \frac{Distance\ between\ vehicles}{Display\ range\ of\ GUI} \qquad (2)$$

Processing circuitry 120 presents graphical vector icon 330B at twice the length of graphical vector icon 330A because the target vehicle associated with graphical vector icon 330B has twice the closure rate of the target vehicle associated with graphical vector icon 330A. Using Equation (2), processing circuitry 120 presents graphical icon 320C at twice the distance as graphical vector icons 320A and 320B based on the larger distance in FIG. 3C. Processing circuitry 120 presents graphical icon 320D at half the distance as graphical vector icons 320A and 320B based on the larger display range of graphical user interface 300D. Processing circuitry 120 also presents graphical vector icon 330D half the length of graphical vector icons 330A and 330B.

Processing circuitry 120 may be configured to determine other characteristics of a graphical vector icon, such as length, thickness, arrow type, color, transparency, brightness, and whether the icon is blinking or solid. Processing circuitry 120 can determine one or more characteristics of a graphical vector icon based on the display range of the graphical user interface and/or the velocity vector of the associated target vehicle. For example, processing circuitry 120 may determine a length of the graphical vector icon as proportional to the relative speed of the target vehicle and inversely proportional to the display range of the graphical user interface. As another example, processing circuitry 120 may present a graphical icon and/or a graphical vector icon as blinking icon(s) in response to determining that the relative speed and/or closure rate of a target vehicle exceeds a threshold.

FIG. 4 is a conceptual block diagram of an example system 410 including means for receiving data indicating the positions of vehicles, in accordance with some examples of this disclosure. System 410 is an example of system 110 shown in FIG. 1, processing circuitry 420 is an example of processing circuitry 120, and display 430 is an example of display 130. In some examples, processing circuitry 420 is configured to present a graphical user interface via a display outside of system 410.

Radar device 440 is configured to detect obstacles based on the reflections of radar signals. Radar device 440 may include a weather radar device that can detect weather conditions and reflectivity. Radar device 440 may be configured to transmit radar signals and receive reflections of the transmitted radar signals. Processing circuitry 420 may be configured to determine the position of an obstacle (e.g., a target vehicle) based on the time of arrival, angle of arrival, amplitude, phase, and/or frequency of the reflections of the transmitted radar signals.

Surveillance device 450 may be configured to transmit and/or receive surveillance signals. Surveillance signals can encode position data, velocity data, and travel path data for a vehicle. An ADS-B device and a Mode-S transponder is an example of surveillance device 450. Processing circuitry 420 may be configured to determine the position and velocity of a target vehicle based on surveillance signals received by surveillance device 450.

Positioning device 460 may be configured to receive positioning signals from GNSS transmitters. Processing circuitry 420 may be configured to determine the position of the ownship vehicle based on the positioning signals received by positioning device 460. Power supply 470 may include a battery, an electric generator, a solar panel, and/or any other power source that can provide electrical power to the other components of system 410.

Radio 480 may be configured to transmit and receive audio signals. For example, radio 480 may include an audio receiver configured to receive audio from an operator or crewmember of the ownship vehicle. Radio 480 may also include a transceiver configured to encode the audio from the audio receiver and transmit the audio on a carrier wave to another vehicle. The transceiver may also be configured to receive audio signals (e.g., radiofrequency signals encoding audio data) from other vehicles. Processing circuitry 420 may be configured to determine the position of a target vehicle based on audio data encoded in signals received radio 480.

Input device 485 may be configured to receive user inputs from an operator or crewmember of the ownship vehicle. Processing circuitry 420 may be configured to determine the position and velocity vector based on user inputs received by input device 485. Based on user inputs received by input device 485, processing circuitry 420 may be configured to select the display range of a graphical user interface presented by processing circuitry 420. Processing circuitry 420 may also select, based on user inputs received by input device 485, a predefined range for presenting graphical vector icons or particular characteristics of graphical icons. Processing circuitry 420 can select, based on user inputs received by input device 485, a threshold speed, a threshold relative velocity, and/or a threshold rate of closure.

Memory device 490 may be configured to store positions (e.g., relative position, latitude, longitude, altitude), velocity vectors, travel paths, starting locations, destination locations, and/or vehicle types, for example. Memory device 490 may also be configured to store data such as predefined ranges, threshold speeds, threshold velocities, and/or threshold rates of closure, which may be predetermined by processing circuitry 420. The predefined ranges, threshold speeds, threshold velocities, and/or threshold rates of closure may stay constant throughout the use of system 410 and across multiple trips (e.g., flights, routes), or these values may change over time.

In some examples, memory device 490 may store program instructions, which may include one or more program modules, which are executable by processing circuitry 420. When executed by processing circuitry 420, such program instructions may cause processing circuitry 420 to provide the functionality ascribed to it herein. The program instructions may be embodied in software, firmware, and/or RAMware. Memory device 490 may include any volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media.

Processing circuitry 420 may be configured to determine a position of a target vehicle based on a particular source of data received by system 410 at a particular data rate. Sources of data include radar device 440, surveillance device 450, radio 480, input device 485, visual means, and/or any other source of data. If processing circuitry 420 determines the position of a first target vehicle based on signals received by surveillance device 450, processing circuitry 420 may be configured to present, for the target vehicle, a graphical icon with a first shape and a graphical vector icon with a solid line. If processing circuitry 420 determines the position of a second target vehicle based on signals received by radar device 440, processing circuitry 420 may be configured to present, for the target vehicle, a graphical icon with a second shape and a graphical vector icon with a dashed line. The presentation of different characteristics based on the source of data may indicate to a user the reliability of the position and velocity determined by processing circuitry 420. For example, surveillance signals may be more reliable than audio data received by radio 480.

Moreover, processing circuitry 420 may determine characteristics of graphical icons and graphical vector icons based on the data rate used to determine the position and velocity of the associated target vehicle. For example, processing circuitry 420 may receive surveillance signals from a first target vehicle at an update rate of once per second. Processing circuitry 420 may receive reflected radar signals from a second target vehicle at an update rate of once per five seconds. Processing circuitry 420 may be configured to determine a first characteristic for the graphical icon associated with the first target vehicle based on the first data rate of once per second and determine a second characteristic for the graphical icon associated with the second target vehicle based on the second data rate of once per five seconds.

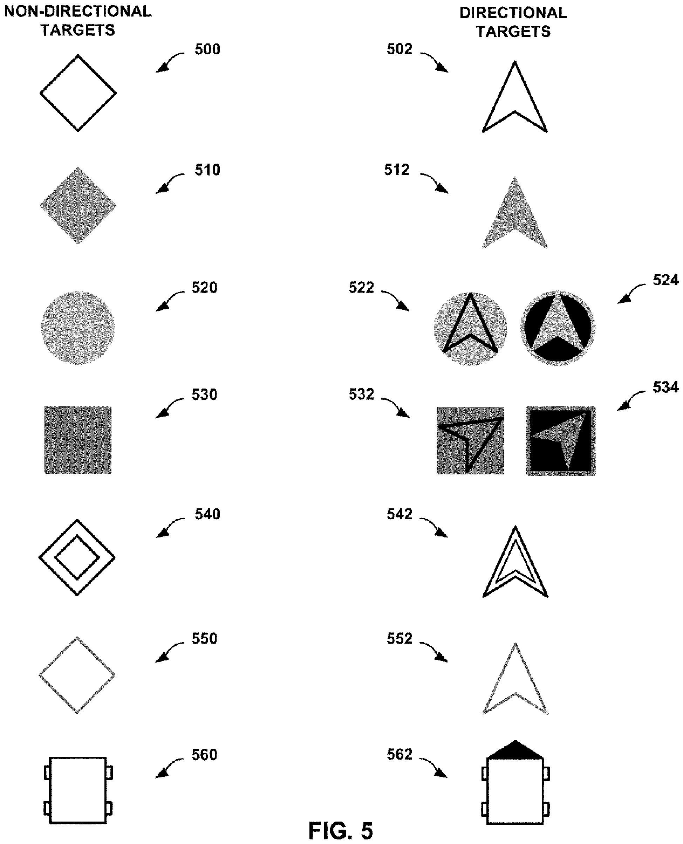

FIG. 5 shows graphical icons with differing characteristics. The graphical icons shown in FIG. 5 are examples of CDTI symbols for Radio Technical Commission for Aeronautics (RTCA) DO-317B. Each of the graphical icons represents a vehicle along with one or more parameters of the vehicle.

FIG. 5 shows graphical icons for directional vehicle traffic (e.g., icons 500, 510, 520, 530, 540, 550, and 560) and non-directional vehicle traffic (e.g., icons 502, 512, 522, 524, 532, 534, 542, 552, and 562). Non-directional graphical icons may not rotate with the orientation of the graphical user interface display. Processing circuitry 120 can present directional graphical icons with directionality relative to the graphical user interface display orientation.

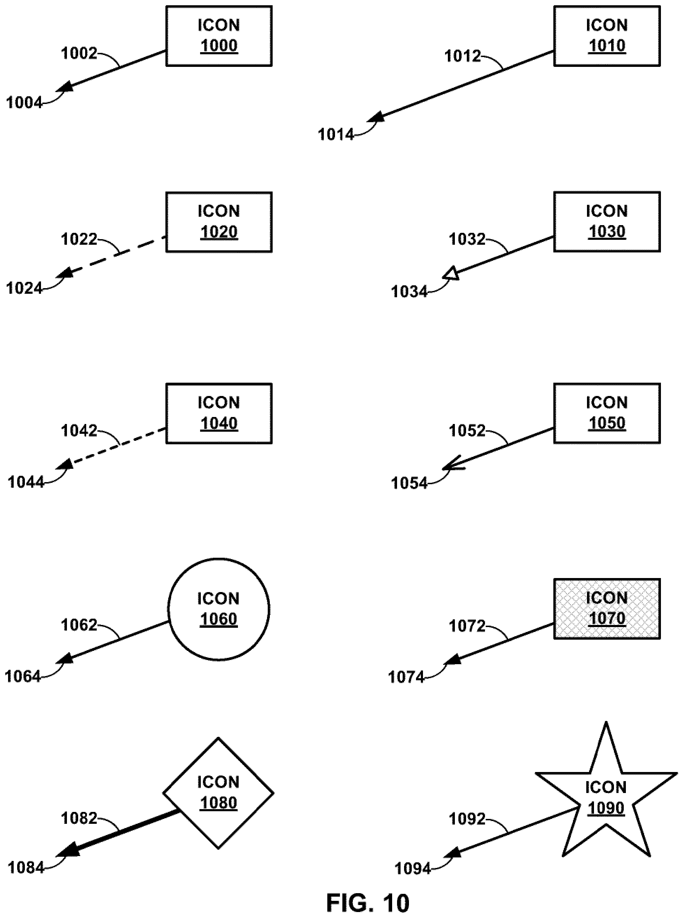

Although not shown in FIG. 5, processing circuitry can also present a graphical vector icon (see, e.g., the graphical vector icons shown in FIG. 10) connected to a directional graphical icon of FIG. 5. Processing circuitry 120 may be configured to present directional graphical icons and graphical vector icons with a resolution of fifteen degrees or finer (e.g., maximum of 7.5 degrees display quantization error). Processing circuitry 120 can determine the traffic directionality for airborne vehicles based on the traffic ground track angle, instead of the heading. Track angle and heading may be different for helicopters and in windy situations. FIG. 5 shows directional graphical icons with a triangular arrow shape and non-directional graphical icons with a diamond shape.

Graphical icons 500, 502, 510, and 512 represent the basic traffic symbols for directional and non-directional vehicle traffic, respectively. The color for graphical icons 500, 502, 510, and 512 can be cyan or white with a black background. The color for graphical icons 500, 502, 510, and 512 can be different than the color of an ownship vehicle icon. For devices that integrate aircraft surveillance applications (ASA) system with TCAS, the graphical icons may be filled (e.g., graphical icons 510 and 512) or unfilled (e.g., graphical icons 500 and 502) with color (e.g., cyan or white). For TCAS/ASA integrated systems, the graphical icons may be unfilled, showing the background color inside the graphical icon.

Graphical icons 540 and 542 provide an indication of traffic application capability, such as off-scale designated traffic. Processing circuitry 120 may be configured to present a designated half-symbol at the display edge and appropriate bearing. Processing circuitry 120 can also indicate the loss of designated status for a target vehicle, possibly due to signal loss or invalid data.

In response to determining a traffic advisory, such as a potential collision, processing circuitry 120 can change the color of a graphical icon to yellow (see graphical icons 520, 522, and 524). Processing circuitry 120 can also change the shape to a circle, while still indicating directionality (e.g., with an inlay) because directionality information is useful for visual search and recognition of alerted vehicles. Processing circuitry 120 may be configured to increase the size of graphical icons 520, 522, and 524 in response to determining a traffic advisory. Processing circuitry 120 can change line widths and fill to improve the interpretation and saliency of the yellow color.

In response to determining a resolution advisory, such as a heighted risk of potential collision, processing circuitry 120 can change the color of a graphical icon to red (see graphical icons 530, 532, and 534). Processing circuitry 120 can also change the shape to a square, while still indicating directionality (e.g., with an inlay). If processing circuitry 120 uses circles and squares to indicate traffic alerts and resolution alerts, processing circuitry 120 may not use circles and squares to indicate other traffic information.

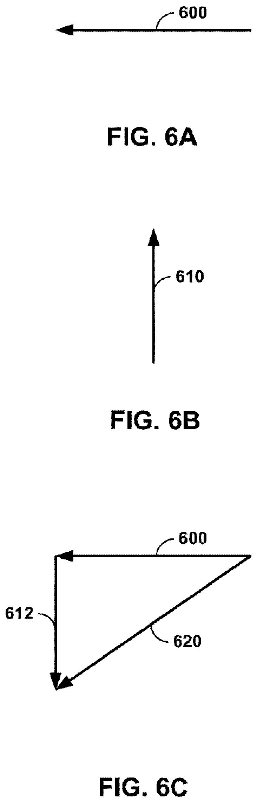

FIGS. 6A-6C are conceptual diagrams showing the determination of a relative velocity vector 620 based on two absolute velocity vectors 600 and 610, in accordance with some examples of this disclosure. In some examples, absolute velocity vector 600 represents the speed and direction of travel of a target vehicle, and absolute velocity vector 610 represents the speed and direction of travel of an ownship vehicle. Velocity vectors 600, 610, 612, and 620 may represent the horizontal velocity (e.g., parallel to the surface of the earth) of two vehicles.

Processing circuitry 120 may be configured to determine relative velocity vector 620 of the target vehicle at least in part by subtracting absolute velocity vector 610 from absolute velocity vector 600. Processing circuitry 120 may first determine velocity vector 612 by inverting velocity vector 610. Processing circuitry 120 may then be configured to determine velocity vector 620 by adding velocity vectors 600 and 612.

FIG. 7 is a graphical user interface 700 including five graphical icons 710 corresponding to vehicles, 720, 730, 740, and 750 and four graphical vector icons 722, 732, 742, and 752, in accordance with some examples of this disclosure. Processing circuitry 120 may be configured to present each graphical vector icon 722, 732, 742, and 752 adjacent to or connected to respective graphical icons 720, 730, 740, and 750. Processing circuitry 120 may be configured to determine the length or any other characteristic of graphical vector icons 722, 732, 742, and 752 based on the display range of graphical user interface 700, the respective absolute or relative velocity vector, the respective rate of closure, the respective source of data, the respective data rate, and/or the respective distance between vehicles.

Processing circuitry 120 may also be configured to present relative altitude indicators 724, 734, 744, and 754 adjacent to respective graphical icons 720, 730, 740, and 750. Relative altitude indicators 724 and 754 include text "-02" to indicate that the target vehicles associated with graphical icons 720 and 750 are two thousand feet below the ownship vehicle. Relative altitude indicators 734 and 744 include text "+18" to indicate that the target vehicles associated with graphical icons 730 and 740 are eighteen thousand feet above the ownship vehicle. Vertical trend indicator 726 indicates that the altitude of the target vehicle associated with graphical icon 720 is declining.

In some examples, processing circuitry 120 may present graphical vector icons only for target vehicles within a predefined range of the ownship vehicle. Additionally or alternatively, processing circuitry 120 may present graphical vector icons only for target vehicles that are closing in on the ownship vehicle (e.g., the distance between the vehicles is decreasing over time). As another example, processing circuitry 120 may present graphical vector icons only for target vehicles with velocity vectors relative to the ownship vehicle that exceed a threshold velocity.

Processing circuitry 120 may be configured to present closure indicators (e.g., graphical vector icons) of surrounding target vehicles towards the ownship vehicle. Processing circuitry 120 can identify or select target vehicles that are positioned long distances from the ownship vehicle but with quick or high closure rates. Processing circuitry 120 can ignore target vehicles that are positioned short distances from the ownship vehicle but that are moving far away from the ownship vehicle. For an efficient display of the traffic situation, processing circuitry 120 can select only potential threats to present to the operator and/or crew of the ownship vehicle. Processing circuitry 120 may identify a potential threat at least in part by determining that a target vehicle is within a predefined range of the ownship vehicle, determining that a target vehicle is closing in on the ownship vehicle, and/or determining that a target vehicle has an absolute velocity or a relative velocity that exceeds a threshold velocity.

FIG. 8 is a conceptual diagram showing the determination of a relative velocity vector and a closure vector based on two absolute velocity vectors, in accordance with some examples of this disclosure. As discussed with respect to FIGS. 6A-6C, processing circuitry 120 may be configured to determine relative velocity vector 830 of target vehicle 820 by subtracting absolute velocity vector 812 from absolute velocity vector 822. Processing circuitry 120 can determine relative velocity vector 830 by adding absolute velocity vector 822 and inverted velocity vector 814, which is equal in magnitude and opposite in direction to absolute velocity vector 812.

Processing circuitry 120 may be configured to determine closure vector 850 based on relative velocity vector 830 and angle 840 using Equation (3). Closure vector 850 is oriented along line 860, which passes through vehicles 810 and 820. Angle 840 extends between relative velocity vector 830 and line 860. The magnitude of closure vector 850 (e.g., the rate of closure) indicates the speed at which target vehicle 820 is approaching or receding from ownship vehicle 810.

$$|closure\ vector| = |relative\ velocity\ vector| \times cosine(angle) \qquad (3)$$

Processing circuitry 120 may be configured to select only the target vehicles with positive closure vectors (e.g., vehicles that are approaching ownship vehicle 810) and present graphical vector icons for the selected target vehicles. Additionally or alternatively, processing circuitry 120 can present graphical vector icons with thicker lines for the selected target vehicles and present graphical vector icons with less thick lines for target vehicles that are not approaching ownship vehicle 100.

In some examples, processing circuitry 120 is configured to present graphical vector icons only for target vehicles that are within a threshold range of ownship vehicle 810, for target vehicles that exceed a threshold speed, and/or for target vehicles with relative velocities exceeding a threshold velocity. Processing circuitry 120 may also be configured to present graphical vector icons only for target vehicles with an estimated time to collision that is less than a threshold time. Processing circuitry 120 can determine an estimated time to collision using Equation (4).

$$Estimated\ time\ to\ collision = \frac{distance\ between\ vehicles}{|closure\ vector|} \qquad (4)$$

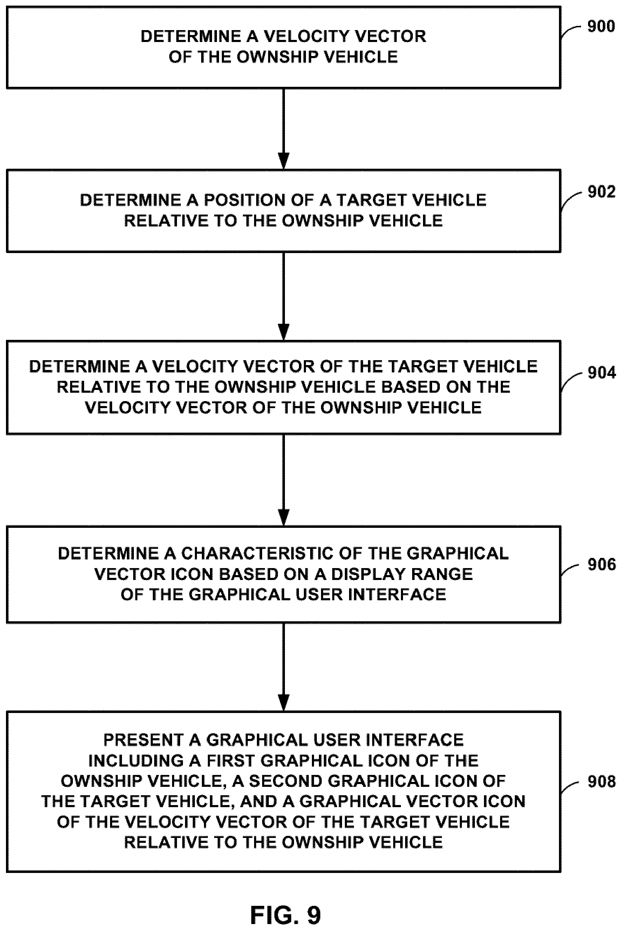

FIG. 9 is a flowchart illustrating example techniques for presenting a graphical user interface including graphical icons corresponding to vehicles and a graphical vector icon, in accordance with some examples of this disclosure. The techniques of FIG. 9 are described with reference to system 110 in FIG. 1, although other components, such as systems 410 in FIG. 4, may exemplify similar techniques.

In the example of FIG. 9, processing circuitry 120 determines a velocity vector of ownship vehicle 100 (900). The velocity vector may include the speed and direction of travel of ownship vehicle 100. In the example of FIG. 9, processing circuitry 120 determines a position of target vehicle 150 relative to ownship vehicle 100 (902). Processing circuitry 120 can determine an absolute position (latitude, longitude, and altitude) of target vehicle and/or a position of target vehicle 150 relative to ownship vehicle 100.

In the example of FIG. 9, processing circuitry 120 determines a velocity vector of target vehicle 150 relative to ownship vehicle 100 based on the velocity vector of ownship vehicle 100 (904). Processing circuitry 120 may be configured to determine the relative velocity vector of target vehicle 150 by subtracting the absolute velocity vector of ownship vehicle 100 from the absolute velocity vector of target vehicle 150.

In some examples, processing circuitry 120 may be configured to determine whether a speed of target vehicle 150 exceeds a threshold speed. In response to determining that the speed of target vehicle 150 is greater than the threshold speed, processing circuitry 120 may be configured to determine the relative velocity vector of target vehicle 150 based on a trajectory of target vehicle 150. In response to determining that the speed of target vehicle 150 is less than the threshold speed, processing circuitry 120 may be configured to determine the relative velocity vector of target vehicle 150 based on a heading of target vehicle 150. In the context of aircraft, slower vehicles are likely to be surface vehicles (e.g., taxiing). Therefore, heading or track angle may be a more accurate indication of the direction of travel for slower vehicles.

In the example of FIG. 9, processing circuitry 120 determines a characteristic (e.g., a length or thickness) of the graphical vector icon based on a display range of the graphical user interface (906). Processing circuitry 120 may be configured to use Equation (1) to determine the length of a line of the graphical vector icon based on the display range of the graphical user interface and the relative velocity of target vehicle 150. Processing circuitry 120 can select target vehicles that are closing in on ownship vehicle 100 (see closure vector 850) and present graphical vector icons only for the selected target vehicles. Thus, a vehicle operator may be able to quickly identify the target vehicles that are closing in on ownship vehicle 100.

In the example of FIG. 9, processing circuitry 120 presents, via display 130, a graphical user interface including a first graphical icon of ownship vehicle 100, a second graphical icon of target vehicle 150 based on the position of target vehicle 150 relative to ownship vehicle 100, and a graphical vector icon of the velocity vector of target vehicle 150 relative to ownship vehicle 100 (908). Processing circuitry 120 may be configured to present the graphical user interface via display 130 or a display that is external to system 110 because, in some examples, system 110 does not include display 130.

FIG. 10 shows additional example graphical icons with differing characteristics, in accordance with some examples of this disclosure. For example, processing circuitry 120 may be configured to determine a characteristic of a graphical icon, a characteristic of a graphical vector icon, and/or a characteristic of an arrow icon based on criteria such as speed, absolute velocity vector, relative velocity vector, rate of closure, data source, data rate, altitude, vehicle type (e.g., airborne, surface, water, large, small, commercial, unmanned, etc.), display range of a graphical user interface, and/or distance between vehicles.

Processing circuitry 120 may be configured to present a graphical icon with a rectangular shape (e.g., graphical icons 1000, 1010, 1020, 1030, 1040, 1050, and 1070), a circular shape (e.g., graphical icon 1060), a diamond shape (e.g., graphical icon 1080), a star shape (e.g., graphical icon 1090), a cross shape (e.g., graphical icon 710 shown in FIG. 7), and/or any other shape based on criteria for the associated vehicle. Processing circuitry 120 may also present a graphical icon with shading (e.g., graphical icon 1070), different colors, and/or blinking.

Processing circuitry 120 may also be configured to present graphical vector icons with different lengths (e.g., graphical vector icon 1012), different dash lengths (e.g., graphical vector icons 1022 and 1042), different thicknesses (e.g., graphical vector icon 1082), different colors, and/or blinking icons. Processing circuitry 120 may be further configured to present graphical vector icons with different arrow types (arrows 1014 and 1034).

For example, processing circuitry 120 can select a first characteristic (e.g., shape, color, brightness, transparency, blinking/solid) for a graphical icon in response to determining that a target vehicle is airborne, a second characteristic in response to determining that the target vehicle is operating on the ground, and a third characteristic in response to determining that the target vehicle is operating on water. Processing circuitry 120 can select a first characteristic in response to determining that the speed or relative velocity of the target vehicle exceeds a threshold speed, and a second characteristic in response to determining that the speed or relative velocity of the target vehicle is less than the threshold speed. Additionally or alternatively, processing circuitry 120 can select a first characteristic in response to determining that the target vehicle is a first type of vehicle (e.g., a commercial aircraft), and a second characteristic in response to determining that the target vehicle is a second type of vehicle (e.g., a general aviation aircraft, a flying car, or an unmanned aircraft).

In some examples, processing circuitry 120 is configured to determine a length of a graphical vector icon in proportion to a relative velocity of the associated vehicle using Equation (1). Processing circuitry 120 may also be configured to determine an arrow type for a graphical vector icon in response to determining that the relative velocity or rate of closure exceeds a threshold. For example, in response to determining that the relative velocity or rate of closure exceeds a threshold, processing circuitry 120 can increase the thickness of the line of the graphical vector icon, increase the size of the arrow of the graphical vector icon, and/or select a different color for the line of the graphical vector icon.

Processing circuitry 120 may be configured to determine multiple characteristics of graphical icons and graphical vector icons based on multiple parameters or criteria. For example, processing circuitry 120 can determine a first characteristic of a graphical vector icon based on the display range of a graphical user interface and a second characteristic of the graphical vector icon based on another parameter, such as the rate of closure. As another example, processing circuitry 120 can determine a characteristic of a graphical vector icon based on the display range of a graphical user interface and a characteristic of the graphical icon based on another parameter, such as the type of vehicle, data source, or data rate.

The following numbered examples demonstrate one or more aspects of the disclosure.

Example 1. A system is configured to mount on an ownship vehicle, and the system includes a receiver configured to receive a signal and processing circuitry configured to determine a velocity vector of the ownship vehicle and determine a position of a target vehicle relative to the ownship vehicle based on the signal. The processing circuitry is also configured to determine a velocity vector of the target vehicle relative to the ownship vehicle based on the signal and the velocity vector of the ownship vehicle. The processing circuitry is further configured to determine a characteristic of a graphical vector icon of the velocity vector of the target vehicle based on a display range of a graphical user interface. The processing circuitry is configured to present, via a display, the graphical user interface including a first graphical icon corresponding to the ownship vehicle, a second graphical icon corresponding to the target vehicle based on the position of the target vehicle relative to the ownship vehicle, and the graphical vector icon with the characteristic

Example 2. The system of example 1, the signal is one of an ADS-B signal or a reflected radar signal, and the receiver is one of an ADS-B receiver or radar transceiver.

Example 3. The system of examples 1-2 or any combination thereof, the processing circuitry is configured to determine the characteristic of the graphical vector icon based on the display range of the graphical user interface and further based on the velocity vector of the target vehicle relative to the ownship vehicle.

Example 4. The system of examples 1-3 or any combination thereof, the graphical vector icon comprises a line, the length of the graphical vector icon comprises a length of the line, and the processing circuitry is configured to determine the length of the line based on the velocity vector of the target vehicle relative to the ownship vehicle and a distance range of the graphical user interface.

Example 5. The system of examples 1-4 or any combination thereof, the graphical vector icon comprises a line, the length of the graphical vector icon comprises a type of arrow at an end of the line, and the processing circuitry is configured to determine the type of arrow at the end of the line based on the velocity vector of the target vehicle relative to the ownship vehicle and a distance range of the graphical user interface.

Example 6. The system of examples 1-5 or any combination thereof, the characteristic of the graphical vector icon is a first characteristic, the processing circuitry is configured to determine the position of the target vehicle based on a particular source of data, and the processing circuitry is configured to determine a second characteristic of the graphical vector icon based on the particular source of data.

Example 7. The system of examples 1-6 or any combination thereof, the processing circuitry is configured to determine the position of the target vehicle based on a particular source of data, and the processing circuitry is further configured to determine a characteristic of the second graphical icon corresponding to the target vehicle based on the particular source of data.

Example 8. The system of examples 1-7 or any combination thereof, the characteristic of the graphical vector icon is a first characteristic, the processing circuitry is further configured to receive data at a particular data rate, the processing circuitry is configured to determine the position of the target vehicle based on the received data, and the processing circuitry is configured to determine a second characteristic of the graphical vector icon based on the particular data rate.

Example 9. The system of examples 1-8 or any combination thereof, the processing circuitry is further configured to receive data at a particular data rate, the processing circuitry is configured to determine the position of the target vehicle based on the received data, and the processing circuitry is further configured to determine a characteristic of the second graphical icon corresponding to the target vehicle based on the particular data rate.

Example 10. The system of examples 1-9 or any combination thereof, the characteristic of the graphical vector icon is a first characteristic, and wherein the processing circuitry is further configured to determine whether the target vehicle is a surface vehicle or an airborne vehicle and determine a second characteristic of the graphical vector icon in response to determining whether the target vehicle is the surface vehicle or the airborne vehicle.

Example 11. The system of examples 1-10 or any combination thereof, the processing circuitry is further configured to determine the target vehicle is a surface vehicle or an airborne vehicle and determine a characteristic of the second graphical icon corresponding to the target vehicle in response to determining whether the target vehicle is the surface vehicle or the airborne vehicle.

Example 12. The system of examples 1-11 or any combination thereof, the processing circuitry is further configured to determine a characteristic of the second graphical icon corresponding to the target vehicle based on the velocity vector of the target vehicle relative to the ownship vehicle.

Example 13. The system of examples 1-12 or any combination thereof, the processing circuitry is configured to determine the velocity vector of the target vehicle relative to the ownship vehicle by at least determining an absolute velocity vector of the target vehicle and subtracting the velocity vector of the ownship vehicle from the absolute velocity vector of the target vehicle.

Example 14. The system of examples 1-13 or any combination thereof, the processing circuitry is further configured to determine whether a speed of the target vehicle is greater than a threshold speed, and the processing circuitry is configured to determine the velocity vector of the target vehicle relative to the ownship vehicle based on a trajectory of the target vehicle in response to determining that the speed of the target vehicle is greater than the threshold speed.

Example 15. The system of examples 1-14 or any combination thereof, the processing circuitry is further configured to determine whether a speed of the target vehicle is less than a threshold speed, and the processing circuitry is configured to determine the velocity vector of the target vehicle relative to the ownship vehicle based on a heading of the target vehicle in response to determining that the speed of the target vehicle is less than the threshold speed.

Example 16. A method includes determining a velocity vector of the ownship vehicle, determining a position of a target vehicle relative to the ownship vehicle, and determining a velocity vector of the target vehicle relative to the ownship vehicle based on the velocity vector of the ownship vehicle. The method also includes determining a characteristic of a graphical vector icon of the velocity vector of the target vehicle based on a display range of a graphical user interface. The method further includes presenting, via a display, the graphical user interface including a first graphical icon corresponding to the ownship vehicle, a second graphical icon corresponding to the target vehicle based on the position of the target vehicle relative to the ownship vehicle, and the graphical vector icon with the characteristic.

Example 17. The method of example 16, the characteristic of the graphical vector icon is a first characteristic, determining the position of the target vehicle is based on a particular source of data, and the method further includes determining at least one of a second characteristic of the graphical vector icon or a characteristic of the second graphical icon corresponding to the target vehicle based on the particular source of data.

Example 18. The method of examples 16-17 or any combination thereof, the characteristic of the graphical vector icon is a first characteristic, the method further includes receiving data at a particular data rate, and determining the position of the target vehicle is based on the received data. The method further includes determining at least one of a second characteristic of the graphical vector icon or a characteristic of the second graphical icon corresponding to the target vehicle based on the particular data rate.

Example 19. The method of examples 16-18 or any combination thereof, the characteristic of the graphical vector icon is a first characteristic, and the method further including determining that the target vehicle is a surface vehicle and not an airborne vehicle and determining at least one of a second characteristic of the graphical vector icon or a characteristic of the second graphical icon corresponding to the target vehicle in response to determining that the target vehicle is a surface vehicle and not an airborne vehicle.

Example 20. A device includes a computer-readable medium having executable instructions stored thereon, configured to be executable by processing circuitry for causing the processing circuitry to receive, from a receiver, a signal and determine a velocity vector of the ownship vehicle. The instructions, when executed, also cause the processing circuitry to determine a position of a target vehicle relative to the ownship vehicle based on a particular source of data based on the signal, determine a velocity vector of the target vehicle relative to the ownship vehicle based on the velocity vector of the ownship vehicle, and determine a characteristic of a graphical vector icon of the velocity vector of the target vehicle based on a display range of a graphical user interface. The instructions, when executed, further cause the processing circuitry to present, via a display, the graphical user interface including a first graphical icon of the ownship vehicle, a second graphical icon of the target vehicle based on the target vehicle relative to the position of the ownship vehicle, and the graphical vector icon with the characteristic.

The disclosure contemplates computer-readable storage media comprising instructions to cause a processor to perform any of the functions and techniques described herein. The computer-readable storage media may take the example form of any volatile, non-volatile, magnetic, optical, or electrical media, such as a RAM, ROM, NVRAM, EEPROM, or flash memory. The computer-readable storage media may be referred to as non-transitory. A programmer, such as patient programmer or clinician programmer, or other computing device may also contain a more portable removable memory type to enable easy data transfer or offline data analysis.

The techniques described in this disclosure, including those attributed to processing circuitry 120 and 420, displays 130 and 430, radar device 440, surveillance device 450, positioning device 460, radio 480, and/or memory device 490, and various constituent components, may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in programmers, such as physician or patient programmers, stimulators, remote servers, or other devices. The term "processor" or "processing circuitry" may generally refer to any of the foregoing logic circuitry, alone or in combination with other logic circuitry, or any other equivalent circuitry.

As used herein, the term "circuitry" refers to an ASIC, an electronic circuit, a processor (shared, dedicated, or group) and memory that execute one or more software or firmware programs, a combinational logic circuit, or other suitable components that provide the described functionality. The term "processing circuitry" refers one or more processors distributed across one or more devices. For example, "processing circuitry" can include a single processor or multiple processors on a device. "Processing circuitry" can also include processors on multiple devices, wherein the operations described herein may be distributed across the processors and devices.

Such hardware, software, firmware may be implemented within the same device or within separate devices to support the various operations and functions described in this disclosure. For example, any of the techniques or processes described herein may be performed within one device or at least partially distributed amongst two or more devices, such as between processing circuitry 120 and 420, displays 130 and 430, radar device 440, surveillance device 450, positioning device 460, radio 480, and/or memory device 490. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors. Example non-transitory computer-readable storage media may include RAM, ROM, programmable ROM (PROM), EPROM, EEPROM, flash memory, a hard disk, a compact disc ROM (CD-ROM), a floppy disk, a cassette, magnetic media, optical media, or any other computer readable storage devices or tangible computer readable media.

In some examples, a computer-readable storage medium comprises non-transitory medium. The term "non-transitory" may indicate that the storage medium is not embodied in a carrier wave or a propagated signal. In certain examples, a non-transitory storage medium may store data that can, over time, change (e.g., in RAM or cache). Elements of devices and circuitry described herein, including, but not limited to, processing circuitry 120 and 420, displays 130 and 430, radar device 440, surveillance device 450, positioning device 460, radio 480, and/or memory device 490, may be programmed with various forms of software. The one or more processors may be implemented at least in part as, or include, one or more executable applications, application modules, libraries, classes, methods, objects, routines, subroutines, firmware, and/or embedded code, for example.

Where processing circuitry 120 or 420 is described herein as determining that a value is less than or equal to another value, this description may also include processing circuitry 120 or 420 determining that a value is only less than the other value. Similarly, where processing circuitry 120 or 420 is described herein as determining that a value is less than another value, this description may also include processing circuitry 120 or 420 determining that a value is less than or equal to the other value. The same properties may also apply to the terms "greater than" and "greater than or equal to."

Various examples of the disclosure have been described. Any combination of the described systems, operations, or functions is contemplated. These and other examples are within the scope of the following claims.

**Claims**

1. A system configured to mount on an ownship vehicle, the system comprising:

a receiver configured to receive a signal; and
processing circuitry configured to:

determine a velocity vector of the ownship vehicle;
determine a position of a target vehicle relative to the ownship vehicle based on the signal;
determine a velocity vector of the target vehicle relative to the ownship vehicle based on the signal and the velocity vector of the ownship vehicle;
determine a characteristic of a graphical vector icon of the velocity vector of the target vehicle based on a display range of a graphical user interface; and
present, via a display, the graphical user interface including:

a first graphical icon corresponding to the ownship vehicle,
a second graphical icon corresponding to the target vehicle based on the position of the target vehicle relative to the ownship vehicle, and
the graphical vector icon with the characteristic.

2. The system of claim 1,
wherein the signal is one of an automatic dependent surveillance - broadcast (ADS-B) signal or a reflected radar signal, and
wherein the receiver is one of an ADS-B receiver or radar transceiver.

3. The system of claim 1, wherein the processing circuitry is configured to determine the characteristic of the graphical vector icon based on the display range of the graphical user interface and further based on the velocity vector of the target vehicle relative to the ownship vehicle.

4. The system of claim 1,
wherein the graphical vector icon comprises a line,
wherein the characteristic of the graphical vector icon comprises a length of the line, and
wherein the processing circuitry is configured to determine the length of the line based on the velocity vector of the target vehicle relative to the ownship vehicle and a distance range of the graphical user interface.

5. The system of claim 1,
wherein the graphical vector icon comprises a line,
wherein the characteristic of the graphical vector icon comprises a type of arrow at an end of the line, and
wherein the processing circuitry is configured to determine the type of arrow at the end of the line based on the velocity vector of the target vehicle relative to the ownship vehicle and a distance range of the graphical user interface.

6. The system of claim 1,
wherein the characteristic of the graphical vector icon is a first characteristic,
wherein the processing circuitry is configured to determine the position of the target vehicle based on a particular source of data, and
wherein the processing circuitry is configured to determine a second characteristic of the graphical vector icon based on the particular source of data.

7. The system of claim 1,
wherein the processing circuitry is configured to determine the position of the target vehicle based on a particular source of data, and
wherein the processing circuitry is further configured to determine a characteristic of the second graphical icon corresponding to the target vehicle based on the particular source of data.

8. The system of claim 1,

wherein the characteristic of the graphical vector icon is a first characteristic,

wherein the processing circuitry is further configured to receive data at a particular data rate,

wherein the processing circuitry is configured to determine the position of the target vehicle based on the received data, and

wherein the processing circuitry is configured to determine a second characteristic of the graphical vector icon based on the particular data rate.

9. The system of claim 1,

wherein the processing circuitry is further configured to receive data at a particular data rate,

wherein the processing circuitry is configured to determine the position of the target vehicle based on the received data, and

wherein the processing circuitry is further configured to determine a characteristic of the second graphical icon corresponding to the target vehicle based on the particular data rate.

10. The system of claim 1, wherein the processing circuitry is further configured to:

determine whether the target vehicle is a surface vehicle or an airborne vehicle, and
determine a characteristic of the second graphical icon corresponding to the target vehicle in response to determining whether the target vehicle is the surface vehicle or the airborne vehicle.

11. The system of claim 1, wherein the processing circuitry is configured to determine the velocity vector of the target vehicle relative to the ownship vehicle by at least:

determining an absolute velocity vector of the target vehicle; and
subtracting the velocity vector of the ownship vehicle from the absolute velocity vector of the target vehicle.

12. The system of claim 1,

wherein the processing circuitry is further configured to determine whether a speed of the target vehicle is greater than a threshold speed, and

wherein the processing circuitry is configured to determine the velocity vector of the target vehicle relative to the ownship vehicle based on a trajectory of the target vehicle in response to determining that the speed of the target vehicle is greater than the threshold speed.

13. The system of claim 1,

wherein the processing circuitry is further configured to determine whether a speed of the target vehicle is less than a threshold speed, and

wherein the processing circuitry is configured to determine the velocity vector of the target vehicle relative to the ownship vehicle based on a heading of the target vehicle in response to determining that the speed of the target vehicle is less than the threshold speed.

14. A method comprising:

determining a velocity vector of the ownship vehicle;
determining a position of a target vehicle relative to the ownship vehicle;
determining a velocity vector of the target vehicle relative to the ownship vehicle based on the velocity vector of the ownship vehicle;
determining a characteristic of a graphical vector icon of the velocity vector of the target vehicle based on a display range of a graphical user interface; and
presenting, via a display, the graphical user interface including a first graphical icon corresponding to the ownship vehicle, a second graphical icon corresponding to the target vehicle based on the position of the target vehicle relative to the ownship vehicle, and the graphical vector icon with the characteristic.

15. The method of claim 14,

wherein the characteristic of the graphical vector icon is a first characteristic,

wherein determining the position of the target vehicle is based on a particular source of data, and

wherein the method further comprises determining at least one of a second characteristic of the graphical vector icon or a characteristic of the second graphical icon corresponding to the target vehicle based on the particular source of data.

OWNSHIP VEHICLE
100

SYSTEM
110

RECEIVER
140

TARGET
VEHICLE
150

SIGNAL
160

PROCESSING
CIRCUITRY
120

DISPLAY
130

FIG. 1

GRAPHICAL USER INTERFACE
200

GRAPHICAL
ICON
220

230

GRAPHICAL
ICON
210

Y

X

FIG. 2

GRAPHICAL USER INTERFACE
300A

ICON
320A

330A

ICON
310A

C/D/DR

FIG. 3A

GRAPHICAL USER INTERFACE
300B

ICON
320B

330B

ICON
310B

2C/D/DR

FIG. 3B

GRAPHICAL USER INTERFACE
300C

ICON
320C

330C

ICON
310C

C/2D/DR

FIG. 3C

GRAPHICAL USER INTERFACE
300D

ICON
320D

330D

ICON
310D

C/D/2DR

FIG. 3D

SYSTEM
410

PROCESSING
CIRCUITRY
420

DISPLAY
430

RADAR
DEVICE
440

SURVEILLANCE
DEVICE
450

POSITIONING
DEVICE
460

POWER
SUPPLY
470

RADIO
480

INPUT DEVICE
485

MEMORY
DEVICE
490

FIG. 4

NON-DIRECTIONAL
TARGETS

DIRECTIONAL
TARGETS

500

502

510

512

520

522 524

530

532 534

540

542

550

552

560

562

FIG. 5

**FIG. 6A**

**FIG. 6B**

**FIG. 6C**

**FIG. 7**

ABSOLUTE
VELOCITY
VECTOR
822

INVERTED
VELOCITY
VECTOR
814

820

RELATIVE
VELOCITY
VECTOR
830

ANGLE
840

CLOSURE
VECTOR
850

ABSOLUTE
VELOCITY
VECTOR
812

LINE
860

810

**FIG. 8**

```
┌─────────────────────────────────────────────┐
│          DETERMINE A VELOCITY VECTOR          │─── 900
│           OF THE OWNSHIP VEHICLE              │
└─────────────────────────────────────────────┘
                      │
                      ▼
┌─────────────────────────────────────────────┐
│       DETERMINE A POSITION OF A TARGET        │─── 902
│      VEHICLE RELATIVE TO THE OWNSHIP VEHICLE  │
└─────────────────────────────────────────────┘
                      │
                      ▼
┌─────────────────────────────────────────────┐
│  DETERMINE A VELOCITY VECTOR OF THE TARGET    │
│  VEHICLE RELATIVE TO THE OWNSHIP VEHICLE      │─── 904
│  BASED ON THE VELOCITY VECTOR OF THE OWNSHIP  │
│  VEHICLE                                      │
└─────────────────────────────────────────────┘
                      │
                      ▼
┌─────────────────────────────────────────────┐
│    DETERMINE A CHARACTERISTIC OF THE          │
│    GRAPHICAL VECTOR ICON BASED ON A           │─── 906
│    DISPLAY RANGE OF THE GRAPHICAL USER        │
│    INTERFACE                                  │
└─────────────────────────────────────────────┘
                      │
                      ▼
┌─────────────────────────────────────────────┐
│        PRESENT A GRAPHICAL USER INTERFACE     │
│      INCLUDING A FIRST GRAPHICAL ICON OF THE  │
│   OWNSHIP VEHICLE, A SECOND GRAPHICAL ICON OF │─── 908
│ THE TARGET VEHICLE, AND A GRAPHICAL VECTOR ICON│
│  OF THE VELOCITY VECTOR OF THE TARGET VEHICLE │
│        RELATIVE TO THE OWNSHIP VEHICLE        │
└─────────────────────────────────────────────┘
```

**FIG. 9**

**FIG. 10**

Europäisches
Patentamt

European
Patent Office

Office européen
des brevets

# EUROPEAN SEARCH REPORT

Application Number

EP 19 18 4283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 185 849 A1 (HONEYWELL INT INC [US]) 13 March 2002 (2002-03-13)<br>* paragraphs [0002], [0011], [0017], [0018], [0049], [0052], [0053], [0058] - [0063], [0068], [0088] *<br>* figures 1,2,6A-6C * | 1-7, 10-15<br>8,9 | INV.<br>G08G5/00<br>G08G5/04 |
| X<br>A | US 2013/024101 A1 (DEROUCHEY JR WILLIAM THOMAS [US]) 24 January 2013 (2013-01-24)<br>* paragraphs [0011], [0012], [0017] *<br>* figures 3-5 * | 1-7, 10-15<br>8,9 | |
| X<br>A | US 2013/009792 A1 (SHAFAAT SYED TAHIR [US]) 10 January 2013 (2013-01-10)<br>* paragraphs [0008], [0010], [0020], [0022], [0024], [0025], [0027], [0035] *<br>* figures 1-4 * | 1-7, 10-15<br>8,9 | |
| X<br>A | US 2013/113635 A1 (WHITLOW STEPHEN [US] ET AL) 9 May 2013 (2013-05-09)<br>* paragraphs [0004], [0007], [0012], [0013], [0021], [0025], [0029], [0031], [0035] *<br>* figures 1-3 * | 1-7, 10-15<br>8,9 | TECHNICAL FIELDS SEARCHED (IPC)<br><br>G08G |
| A | US 7 148 816 B1 (CARRICO MATTHEW J [US]) 12 December 2006 (2006-12-12)<br>* page 1, column 1, lines 57-64 *<br>* page 1, column 2, lines 63-67 *<br>* page 2, column 3, lines 20-39,47-61 *<br>* page 2, column 4, lines 53-58 *<br>* page 3, column 5, lines 22-28, 50-59 *<br>* figures 1-3 * | 1-15 | |

-/--

The present search report has been drawn up for all claims

| Place of search | Date of completion of the search | Examiner |
|---|---|---|
| The Hague | 19 November 2019 | Roxer, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 18 4283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Federal Aviation Administration: "Advisory Circular 20-172B, Airworthiness Approval for ADS-B In Systems and Applications", , 20 May 2015 (2015-05-20), XP055642894, Retrieved from the Internet: URL:http://www.faa.gov/documentLibrary/media/Advisory_Circular/AC_20-172B.pdf [retrieved on 2019-11-15] | 8,9 | |
| A | * pages 26-32 * <br> * figures B-1,B-2,B-3,B-4 * <br> ----- | 1-7, 10-15 | |
| A | US 2011/118981 A1 (CHAMLOU ROXANEH [US]) 19 May 2011 (2011-05-19) * paragraphs [0012], [0015], [0020], [0035], [0055], [0056] * * figures 4A,4B * <br> ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 19 November 2019 | Roxer, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 4283

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2019

| Patent document cited in search report | | Publication date | Patent family member(s) | | Publication date |
|---|---|---|---|---|---|
| EP 1185849 | A1 | 13-03-2002 | EP 1185849 A1<br>US 2002089432 A1<br>WO 0071985 A1 | | 13-03-2002<br>11-07-2002<br>30-11-2000 |
| US 2013024101 | A1 | 24-01-2013 | NONE | | |
| US 2013009792 | A1 | 10-01-2013 | GB 2492665 A<br>US 2013009792 A1 | | 09-01-2013<br>10-01-2013 |
| US 2013113635 | A1 | 09-05-2013 | EP 2592389 A1<br>US 2013113635 A1 | | 15-05-2013<br>09-05-2013 |
| US 7148816 | B1 | 12-12-2006 | NONE | | |
| US 2011118981 | A1 | 19-05-2011 | NONE | | |

EPO FORM P0459

For more details about this annex : see Official Journal of the European Patent Office, No. 12/82